# EUROPÄISCHE PATENTANMELDUNG

(11) **EP 0 992 939 A1**
(43) Veröffentlichungstag der Anmeldung: **12.04.2000**
(21) Anmeldenummer: 99119373.1
(22) Anmeldetag: 29.09.1999
(51) Int. Cl.: G06K 19/077

(54) **Verfahren zur Herstellung eines Mikrotransponders**

(30) Priorität: 07.10.1998 DE 19846237
(71) Anmelder: FRAUNHOFER-GESELLSCHAFT ZUR FÖRDERUNG DER ANGEWANDTEN FORSCHUNG E.V., 80636 München (DE)
(72) Erfinder: Plettner, Andreas, 82340 Feldafing (DE); Haberger, Karl, 82152 Planegg (DE)
(74) Vertreter: Schoppe, Fritz, Dipl.-Ing.

(57) **Zusammenfassung**

Bei einem Verfahren zum Herstellen eines Mikrotransponders wird zunächst eine Antennenmetallisierung (12) mit einem ersten (16) und einem zweiten (18) Anschlußende auf eine Trägersubstrat (10) aufgebracht, um ein erstes Modul zu bilden. Eine Verbindungsmetallisierung (2, 4) wird auf eine flexible Trägerfolie (6) aufgebracht, woraufhin ein Schaltungschip (8) mit einer ersten und einer zweiten Anschlußfläche auf die Verbindungsmetallisierung (2, 4) aufgebracht wird, derart, daß zumindest die erste Anschlußfläche des Schaltungschips (8) mit der Verbindungsmetallisierung (2, 4) elektrisch leitfähig verbunden wird. Die flexible Trägerfolie (6) mit dem darauf angebrachten Schaltungschip (8) stellt ein zweites Modul dar. Das erste und das zweite Modul werden nachfolgend derart verbunden, daß die Verbindungsmetallisierung (2, 4) mit dem ersten Anschlußende der Antennenmetallisierung (12) elektrisch leitfähig verbunden wird, und das die zweite Anschlußfläche des Schaltungschips (8) mit dem zweiten Anschlußende der Antennenmetallisierung (12) elektrisch leitfähig verbunden wird. Abschließend werden Randbereiche der flexiblen Trägerfolie (6) mit benachbarten Bereichen des Trägersubstrats (10) verbunden, um zumindest den Schaltungschip (8) einzukapseln.

## Beschreibung

Die vorliegende Erfindung bezieht sich auf ein Verfahren zum Herstellen eines Mikrotransponders, und insbesondere eines solchen Mikrotransponders, der einen Schaltungschip aufweist, der die Transponderelektronik enthält, und der ferner eine Spulenmetallisierung besitzt, die als Antenne wirksam ist.

Durch die Entwicklung kontaktbehafteter und kontaktloser Chipkarten hat sich ein völlig neuer und schnell wachsender Markt für elektronische Mikro-Systeme ergeben. Integrierte Schaltungen werden nunmehr nicht mehr lediglich in Großgeräte oder auch Handsysteme eingebaut, sondern sozusagen "nackt" in Chipkarten. Eine konsequente Weiterentwicklung führt zur sogenannten "Wegwerfelektronik", deren erster Vertreter die Telefonkarte war. Neuere Anwendungsgebiete für diese sogenannte "Wegwerfelektronik" sind elektronische Etiketten, die preisgünstige Chips bzw. Mikromodule in preisgünstigen ökologisch akzeptierten Trägern erfordern. Den einfachsten Fall eines elektronischen Etiketts würde die Einbettung eines kontaktlosen Moduls, das aus einer integrierten Schaltung und einer Antennenspule besteht, zwischen zwei Papieren darstellen.

Transpondermodule für elektronische Etiketten sind aus den Patent Abstracts of Japan, Veröffentlichungsnummer 09297535A zu der japanischen Anmeldung 08109052 und den Patent Abstracts of Japan, Veröffentlichungsnummer 09293130A zu der japanischen Anmeldung 08109051 offenbart. Bei den in den oben genannten Schriften beschriebenen elektronischen Etiketten ist ein integrierter Schaltungschip zusammen mit einer Antenne in ein filmartiges Harz eingegossen. Dieses filmartige Harz wird dann in eine Metallform eingebracht, in der ein äußeres Harz um das filmartige Harz herumgegossen wird.

Die Patent Abstracts of Japan, Veröffentlichungsnummer 090198481A zu der japanischen Anmeldung 08005845 offenbaren ein elektronisches Etikett, bei dem ein Schaltungschip und eine Antenne vom Schleifentyp auf ein Substrat aufgebracht sind, wobei das äußere Ende der Antenne über eine Überbrückungsmetallisierung, die über die Windungen der Antenne geführt ist und von denselben mittels einer isolierenden Harzschicht getrennt ist, mit einem Anschluß auf der integrierten Schaltung verbunden ist.

In den Patent Abstracts of Japan, Veröffentlichungsnummer 08216573A zu der japanischen Anmeldung 07021785 ist eine kontaktfreie IC-Karte beschrieben, die einen Schaltungschip und einen Antennenabschnitt aufweist. Der Schaltungschip ist auf einem Schaltungsabschnitt, der auf einem Polyesterfilm vorgesehen ist, angebracht, wobei auch der Antennenabschnitt auf dem Polyesterfilm gebildet ist. Mittels einer Haftschicht ist ein zweiter Polyesterfilm, der den Schaltungschip einbettet, auf dem ersten Polyesterfilm gebildet. Darüberhinaus ist ein dritter Polyesterfilm mittels einer weiteren Haftschicht auf der Oberfläche des zweiten Polyesterfilms angebracht.

In der DE 19639902 A1 sind kontaktlose Chipkarten und Verfahren zur Herstellung derselben beschrieben. Die dort beschriebenen Chipkarten weisen einen elektrisch isolierenden, einstückigen Kartenkörper auf, der eine oder mehrere Aussparungen auf einer Seite desselben besitzt. Ferner ist ein Leiterbahnmuster auf der Oberfläche des Kartenkörpers vorgesehen, wobei die Leiterbahnen direkt auf Oberflächenbereichen der mit wenigstens einer Aussparung versehenen Kartenkörperseite angebracht sind, wobei in den Aussparungen ein oder mehrere Chips, die mit wenigstens einer der Leiterbahnen kontaktiert sind, angeordnet sind.

Eine Übersicht bekannter Verfahren zum Aufbringen von integrierten Schaltungschips auf einem Substrat, beispielsweise durch ein Flip-Chip-Verfahren, ist bei H. Reichl u.a.: Packaging-Trends: High-Tech im Kleinstformat, Elektronik 12/1998 (oder SMT Nürnberg 98, Conference Proceedings), zu finden.

Ausgehend von diesem genannten Stand der Technik liegt der vorliegenden Erfindung die Aufgabe zugrunde, ein preisgünstiges Verfahren zu schaffen, das die Herstellung von ultraflachen Mikrotranspondern, die beispielsweise für elektronische Etiketten geeignet sind, ermöglicht.

Diese Aufgabe wird durch ein Verfahren gemäß Anspruch 1 gelöst.

Die vorliegende Erfindung schafft ein Verfahren zum Herstellen eines Mikrotransponders, wobei zunächst eine Antennenmetallisierung mit einem ersten und einem zweiten Anschlußende auf ein Trägersubstrat aufgebracht wird. Ferner wird eine Verbindungsmetallisierung auf eine flexible Trägerfolie aufgebracht, wobei nachfolgend ein Schaltungschip mit einer ersten und einer zweiten Anschlußfläche auf die Verbindungsmetallisierung derart aufgebracht wird, daß zumindest die erste Anschlußfläche des Schaltungschips mit der Verbindungsmetallisierung elektrisch leitfähig verbunden wird. Im Anschluß werden das Trägersubstrat und die Trägerfolie derart zusammengefügt, daß die Verbindungsmetallisierung mit dem ersten Anschlußende der Antennenmetallisierung elektrisch leitfähig verbunden wird, und daß die zweite Anschlußfläche des Schaltungschips mit dem zweiten Anschlußende der Antennenmetallisierung elektrisch leitfähig verbunden wird. Randbereiche der flexiblen Trägerfolie werden dann mit benachbarten Bereichen des Trägersubstrats verbunden, um zumindest den Schaltungschip einzukapseln.

Die vorliegende Erfindung schafft somit ein Verfahren zum Herstellen eines Mikrotransponders, bei dem zunächst zwei Module gebildet werden, die im letzten Schritt zusammengesetzt werden. Das erste Modul besteht aus einem Trägersubstrat, das beispielsweise aus Kunststoff oder Papier bestehen kann, auf dem die Antennenmetallisierung, d.h. die Spule, ausgebildet wird. Das zweite Modul besteht aus einer dünnen Trägerfolie, die vorzugsweise aus Kunststoff besteht, auf die eine oder mehrere Verbindungsmetallisierungen und der Schaltungschip aufgebracht sind. Diese beide Module werden dann derart zusammengefügt, daß die für die elektrischen Verbindungen zwischen der Spule und dem Schaltungschip notwendigen Kontaktierungen realisiert werden. Die Trägerfolie wird dann verwendet, um den Schaltungschip und optional weitere Bereiche der Spulenmetallisierung bzw. der Verbindungsmetallisierungen einzukapseln, indem Randbereiche der Trägerfolie mit benachbarten Bereichen des Trägersubstrats durch Verschweißen oder Verkleben verbunden werden, so daß insbesondere der Schaltungschip vor externen Einflüssen geschützt werden kann.

Gemäß der vorliegenden Erfindung können die beiden Module zunächst getrennt voneinander prozessiert werden, so daß bei der Prozessierung des einen Moduls jeweils keine Rücksicht auf das andere Modul genommen werden muß. Die beiden Module können dann derart zusammengefügt werden, daß beim Zusammenfügen sämtliche notwendigen elektrischen Verbindungen hergestellt werden. Lediglich bei einigen Ausführungsbeispielen notwendige Durchkontaktierungen durch das Trägersubstrat sind in einem getrennten Schritt vor oder nach dem Zusammenfügen der beiden Module auszuführen. Die dünne Trägerfolie, die zum einen zum Handhaben des Schaltungschips und der Verbindungsmetallisierung dient, wird erfindungsgemäß nach dem Zusammenfügen der beiden Module verwendet, um zumindest den Schaltungschip und vorzugsweise überdies die Bereiche, in denen die Verbindung zwischen der Verbindungsmetallisierung und der Antennenmetallisierung realisiert sind, einzukapseln, indem Randbereiche dieser dünnen Trägerfolie mit dem Trägersubstrat verschweißt oder verklebt werden. Dieses Einkapseln wird vorzugsweise im Vakuum oder unter Verwendung eines Schutzgas durchgeführt, um den Einschluß möglicherweise schädigender Substanzen zu verhindern.

Ausführungsbeispiele und Weiterbildungen der vorliegenden Erfindung sind in den abhängigen Ansprüchen definiert.

Bevorzugte Ausführungsbeispiele der vorliegenden Erfindung werden nachfolgend bezugnehmend auf die beiliegenden Zeichnungen, in denen gleiche Elemente jeweils mit gleichen Bezugszeichen bezeichnet sind, näher erläutert. Es zeigen:
- Fig. 1a) bis 1e): eine schematische Darstellung zur Veranschaulichung eines ersten Ausführungsbeispiels des erfindungsgemäßen Verfahrens;
- Fig. 2a) bis 2d): eine schematische Darstellung zur Veranschaulichung eines zweiten Ausführungsbeispiels des erfindungsgemäßen Verfahrens;
- Fig. 3a) bis 3e): eine schematische Darstellung zur Veranschaulichung eines dritten Ausführungsbeispiels des erfindungsgemäßen Verfahrens;
- Fig. 4a) bis 4e): eine schematische Darstellung zur Veranschaulichung eines vierten Ausführungsbeispiels der vorliegenden Erfindung;
- Fig. 5a) bis 5e): eine schematische Darstellung zur Veranschaulichung eines fünften Ausführungsbeispiels der vorliegenden Erfindung;
- Fig. 6a) bis 6c): eine schematische Darstellung zur Veranschaulichung eines sechsten Ausführungsbeispiels des erfindungsgemäßen Verfahrens;
- Fig. 7a) bis 7c): eine schematische Darstellung zur Veranschaulichung eines siebten Ausführungsbeispiels des erfindungsgemäßen Verfahrens.

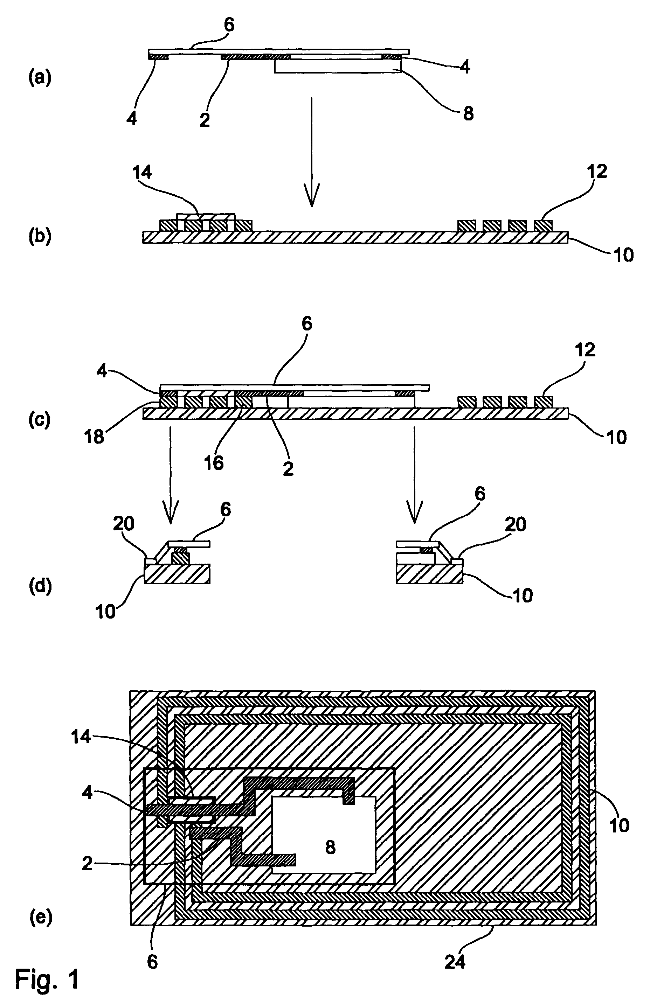

Bezugnehmend auf Fig. 1 wird nun das erste Ausführungsbeispiel des erfindungsgemäßen Verfahrens näher erläutert. Wie oben dargelegt wurde, werden bei dem erfindungsgemäßen Verfahren zur Herstellung eines Mikrotransponders zunächst zwei voneinander getrennte Module erzeugt. Das erzeugte erste Modul ist in Fig. 1a) gezeigt. Zur Erzeugung dieses ersten Moduls, das auch als Schaltungschipmodul bezeichnet werden kann, werden bei diesem Ausführungsbeispiel zunächst eine erste Verbindungsmetallisierung 2 und eine zweite Verbindungsmetallisierung 4 auf eine dünne Haltefolie 6, die vorzugsweise aus Kunststoff besteht, aufgebracht. Auf die Verbindungsmetallisierung 2 und 4 wird dann ein Schaltungschip 8 aufgebracht. Der Schaltungschip 8 enthält die für den Mikrotransponder erforderliche integrierte Schaltung und besitzt auf oder in einer Hauptoberfläche desselben zwei Anschlußflächen, die für den Betrieb des Mikrotransponders mit jeweiligen Anschlußenden einer Spulenantennenmetallisierung verbunden werden müssen. Der Schaltungschip 8 wird derart auf die Verbindungsmetallisierung 2 aufgebracht, daß die erste Anschlußfläche desselben mit der ersten Verbindungsmetallisierung 2 elektrisch leitfähig verbunden wird, während die zweite Anschlußfläche desselben mit der Verbindungsmetallisierung 4 elektrisch leitfähig verbunden wird. Somit ergibt sich der in Fig. 1a) dargestellte Aufbau des ersten Moduls.

Dieses erste Modul wird aus extrem dünnen Materialien hergestellt. Dies ist wichtig, da sich der Schaltungschip 8 mit der Haltefolie 6 nach dem Fertigstellen des Mikrotransponders nicht merkbar von einem Trägersubstrat, auf dem die Spulenmetallisierung angeordnet ist, abheben soll. Der Schaltungschip und die Folie besitzen vorzugsweise eine Dicke von weniger als 50 µm.

Die Verbindungsmetallisierungen 2 und 4, die beispielsweise aus Al, Cu und dergleichen bestehen können, können durch beliebige Verfahren auf die Folie aufgebracht werden, beispielsweise durch eine Kaschierung und nachfolgende Strukturierung, ein Aufdampfen oder ein Aufsputtern und eine nachfolgende Strukturierung, oder alternativ ein Aufdampfen oder Sputtern unter Verwendung einer Schattenmaske, um bereits strukturierte Leitungen aufzubringen. Die Verbindungsmetallisierungen können eine Dicke von weniger als einem µm aufweisen, da die Leiterbahnen der Verbindungsmetallisierungen kurz und breit gestaltet werden können. Nach Fertigstellung der Verbindungsmetallisierungen 2 und 4 wird der Schaltungschip 8 auf den Kontaktbereichen der Verbindungsmetallisierungen plaziert und elektrisch leitfähig mit denselben verbunden, was beispielsweise durch Thermokompression, Leitkleber, anisotrope Leitkleber oder Ultraschallkompression durchgeführt werden kann.

In Fig. 1b) ist das zweite Modul dargestellt, das aus einem Trägersubstrat 10 und einer auf eine Hauptoberfläche des Trägersubstrats 10 aufgebrachten Antennenmetallisierung 12 besteht. Das Trägersubstrat kann beispielsweise aus Kunststoff oder Papier bestehen. Die Antennenmetallisierung 12, die die Form einer Spule aufweist, kann wiederum durch beliebige bekannte Verfahren auf dem Trägersubstrat 10 gebildet werden. Beispielsweise kann die Spulenmetallisierung durch Ätzen einer Kaschierung gebildet werden. Alternativ kann auf dem Trägersubstrat 10 ein Draht zu einer Spule gelegt werden. wiederum alternativ kann das Trägersubstrat 10 mit einem Metall, beispielsweise Cu, Al und dergleichen, bedampft und nachfolgend strukturiert werden. Um eine adäquate Dicke der Spulenmetallisierung 12 zu erreichen, kann die aufgedampfte Metallisierung nachfolgend mittels eines galvanischen Verfahrens verstärkt werden. Wie ferner in Fig. 1b) gezeigt ist, wird in einem Bereich der Spulenmetallisierung 12 eine lokale dünne Isolationsschicht 14, beispielsweise mittels eines Druckprozesses, erzeugt. Diese lokale Isolationsschicht wird in dem Bereich erzeugt, auf dem später die zweite Verbindungsmetallisierung 4 zu liegen kommt, um dadurch einen Kurzschluß zwischen der zweiten Verbindungsmetallisierung 4 und der Spulenmetallisierung 12 zu verhindern.

Es sei an dieser Stelle bemerkt, daß alternativ zu dem Aufbringen der Isolationsschicht 14 auf die Spulenmetallisierung 12 diese lokale Isolationsschicht auch auf entsprechenden Bereichen des ersten Moduls gebildet werden könnte, beispielsweise durch einen entsprechenden Druckprozeß oder eine Oberflächenoxidation der Metallisierung. Da die Leitungen des ersten Moduls sehr dünn sind, im Vergleich zu der Antennenmetallisierung, die eine Dicke von beispielsweise 4 bis 30 µm aufweisen kann, kann es günstiger sein, die Isolationsschicht auf dem ersten Modul, das in Fig. 1a) gezeigt ist, auszubilden. Die Isolationsschicht 14 kann aus einem Acryllack mit einer Dicke von 0,2 bis 2 µm bestehen, wobei dieser Acryllack dann lokal an den späteren Kontaktstellen entfernt wird, was durch einen thermischen Prozeß geschieht. Wird die lokale Isolationsschicht auf dem ersten Modul gebildet, kann dies vor oder nach dem Aufbringen des Schaltungschips 8 auf die Verbindungsmetallisierungen 2 und 4 erfolgen.

In einem nachfolgenden Schritt, werden nun das erste Modul und das zweite Modul zusammengefügt, wie in Fig. 1c) gezeigt ist. Dabei wird die erste Verbindungsmetallisierung 2 mit einem ersten Anschlußende 16 der Antennenmetallisierung 12 elektrisch leitfähig verbunden, während die zweite Verbindungsmetallisierung 4 mit einem zweiten Anschlußende 18 der Antennenmetallisierung elektrisch leitfähig verbunden wird. Bei dem in Fig. 1 dargestellten Ausführungsbeispiel ergibt sich hierbei eine isoplanare Kontaktierung. Wie in Fig. 1d) gezeigt ist, wird nachfolgend die Trägerfolie 6 an den Rändern derselben mit dem Trägersubstrat 10 derart verbunden, daß bei dem dargestellten Ausführungsbeispiel der Schaltungschip 8 sowie die Verbindungsbereiche zwischen Antennenmetallisierung und Verbindungsmetallisierung eingekapselt werden. Dies kann, wie in Fig. 1d) gezeigt ist, erreicht werden, in dem die Ränder der dünnen Trägerfolie 6 zu dem Trägersubstrat 10 hin gebogen werden, und nachfolgend die an das Trägersubstrat 10 anliegenden Bereiche 20 der Folie mit dem Trägersubstrat 10 verschweißt oder verklebt werden. Somit kann gemäß der vorliegenden Erfindung in einfacher Weise eine Einkapselung des Schaltungschips so wie bei dem dargestellten Ausführungsbeispiel der Verbindungsstellen bewirkt werden, um einen Schutz vor externen Einflüssen zu ermöglichen. Dieser Verbindungsprozeß zwischen Trägerfolie 6 und Trägersubstrat 10 wird vorzugsweise im Vakuum durchgeführt.

Eine Draufsicht auf das mittels des obigen Verfahrens hergestellten Mikrotransponders ist in Fig. 1e) dargestellt. Dabei ist in dieser Draufsicht insbesondere der Verlauf der Verbindungsmetallisierungen 2 und 4 und die Anordnung der Isolationsschicht 14 zu erkennen.

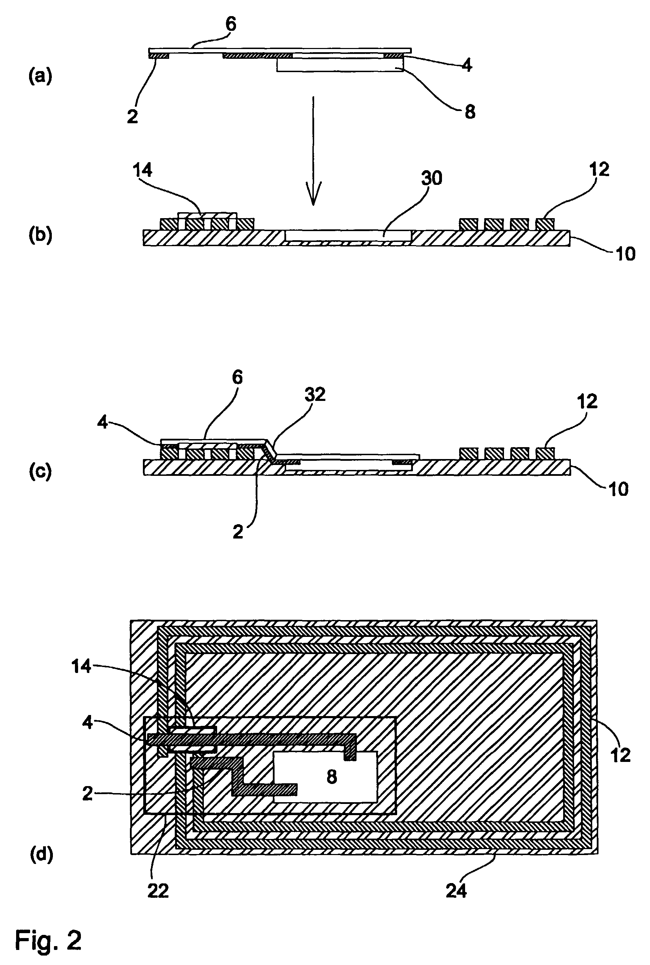

In Fig. 2 ist schematisch ein zweites Ausführungsbeispiel des erfindungsgemäßen Herstellungsverfahrens dargestellt. Das in Fig. 2 gezeigte Verfahren entspricht im wesentlichen dem bezugnehmend auf Fig. 1 beschriebenen Verfahren, wobei jedoch in dem Trägersubstrat 10 eine Ausnehmung 30 vorgesehen ist, in die der Schaltungschip 8 bei Zusammenfügen des ersten und des zweiten Moduls eingebracht wird. Die Aussparung 30 kann mittels beliebiger bekannter Verfahren in dem Trägersubstrat 10 gebildet werden. Da die Haltefolie 6 und die auf demselben vorgesehene dünne Verbindungsmetallisierung 2 flexibel sind, ergibt sich der bei 32 in Fig. 2c) gezeigte Verlauf der Haltefolie 6. Ein Vorteil dieses Ausführungsbeispiels des erfindungsgemäßen Verfahrens liegt darin, daß durch die Ausnehmung 30 ein verbesserter Schutz des Schaltungschips 8 möglich ist und ferner derselbe besser fixiert werden kann. Wiederum werden die Randbereiche der Haltefolie 6 mit benachbarten Bereichen des Trägersubstrats 10 verklebt oder verschweißt, um eine Einkapselung des Schaltungschips zu erreichen.

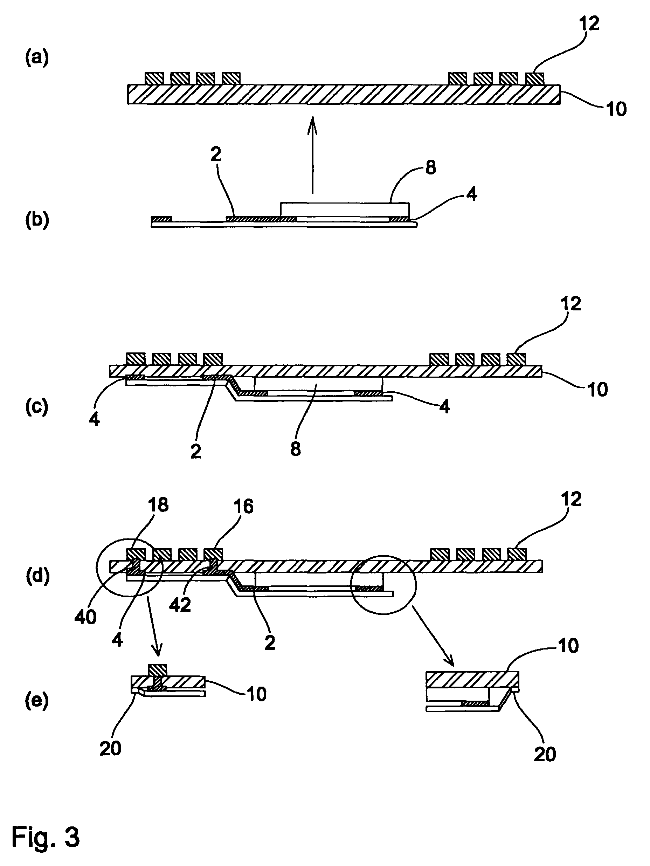

In Fig. 3 ist ein drittes Ausführungsbeispiel des erfindungsgemäßen Verfahrens schematisch dargestellt. In Fig.3a) ist das zweite Modul dargestellt, das dem oben beschriebenen zweiten Modul entspricht. In Fig.3b) ist das erste Modul dargestellt, das ebenfalls dem oben beschriebenen ersten Modul entspricht. Im Unterschied zu den oben beschriebenen Ausführungsbeispielen werden das erste und das zweite Modul nun jedoch derart zusammengefügt, daß der Schaltungschip 8 auf der Oberfläche des Trägersubstrats 10 zu liegen kommt, die der Oberfläche des Trägersubstrats 10 gegenüberliegt, auf der die Antennenmetallisierung 12 gebildet ist, siehe Fig. 3c). Somit wird bei dem gezeigten dritten Ausführungsbeispiel gleichzeitig mit dem Zusammenfügen des ersten und des zweiten Moduls noch keine elektrisch leitfähige Verbindung zwischen dem ersten und dem zweiten Anschlußende der Antennenmetallisierung 12 und der ersten und der zweiten Verbindungsmetallisierung 2 und 4 bewirkt. Um diese elektrisch leitfähige Verbindung zu realisieren, wird eine Durchkontaktierung 40 bzw. 42 durchgeführt, siehe Fig. 3d). Mittels der Durchkontaktierung 42 wird eine elektrisch leitfähige Verbindung zwischen der ersten Verbindungsmetallisierung 2 und dem ersten Verbindungsende 16 der Antennenmetallisierung 12 bewirkt, während mittels der Durchkontaktierung 40 eine elektrisch leitfähige Verbindung zwischen der zweiten Verbindungsmetallisierung 4 und dem zweiten Anschlußende 18 der Antennenmetallisierung 12 bewirkt wird.

Um die Durchkontaktierungen zu bewirken, können beispielsweise Thermokompressionsverfahren verwendet werden. Alternativ können die Durchkontaktierungen mittels einer Ultraschallkompression, mittels Schweißens oder mittels Lötens erzeugt werden. Es ist dabei anzumerken, daß die Durchkontaktierung auch bereits erzeugt werden kann, wenn die beiden Module noch nicht zusammengefügt sind, d.h. in dem Stadium des zweiten Moduls, das in Fig. 3a) gezeigt ist, so daß beim Zusammenfügen der beiden Module die entsprechenden elektrisch leitfähigen Verbindungen zwischen den Durchkontaktierungen und den Verbindungsmetallisierungen erzeugt werden. Wie in Fig. 3e) gezeigt ist, werden die Randbereiche 20 der Haltefolie wiederum mit benachbarten Bereichen des Trägersubstrats 10 verschweißt oder verklebt, um eine Kapselung des Schaltungschips und bei dem dargestellten Ausführungsbeispiel weiterer Bereiche zu erzeugen.

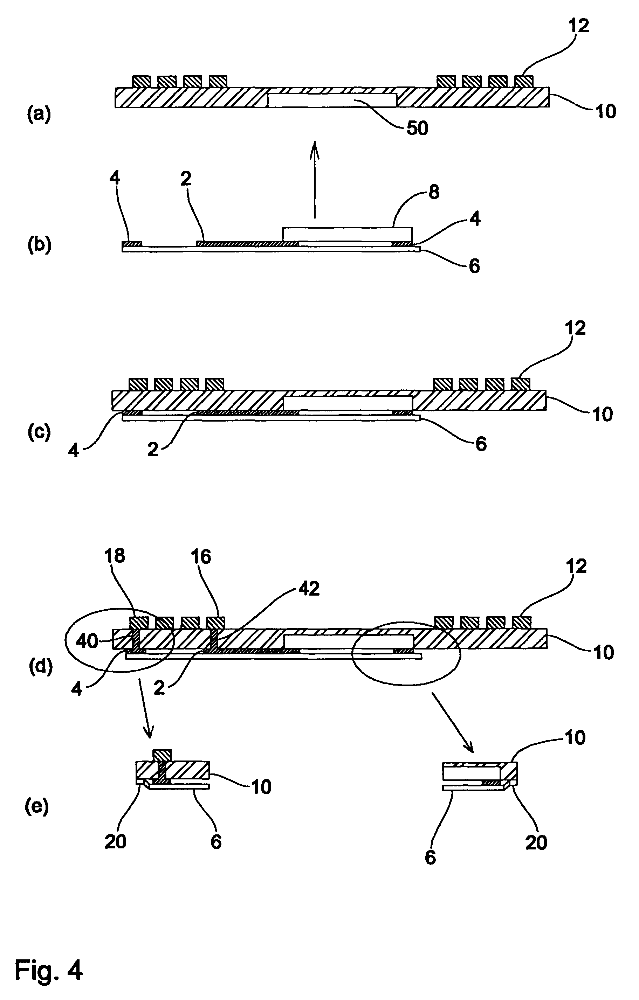

Das in Fig. 4 dargestellte vierte Ausführungsbeispiel des erfindungsgemäßen Verfahrens unterscheidet sich von dem bezugnehmend auf Fig. 3 beschriebenen Ausführungsbeispiel dadurch, daß in der der Antennenmetallisierung 12 gegenüberliegenden Oberfläche des Trägersubstrats 10 eine Ausnehmung 50 gebildet ist, in die der Schaltungschip 8 beim Zusammenfügen des ersten und des zweiten Moduls eingebracht wird. Wie in Fig. 4c) gezeigt ist, ist dadurch eine Isoplanarität der Verbindungsmetallisierungen 2 und 4 möglich. Wie bei dem Ausführungsbeispiel von Fig. 3 werden auch nun Durchkontaktierungen 40, 42 zur elektrisch leitfähigen Verbindung zwischen den Verbindungsmetallisierungen 2 und 4 und den ersten und zweiten Anschlußenden 16 und 18 der Antennenmetallisierung 12 erzeugt. Ferner werden auch gemäß dem vierten Ausführungsbeispiel die Randbereiche 20 der Haltefolie 6 mit benachbarten Bereichen des Trägersubstrats 10 verschweißt, bzw. verklebt, um eine Kapselung zu bewirken.

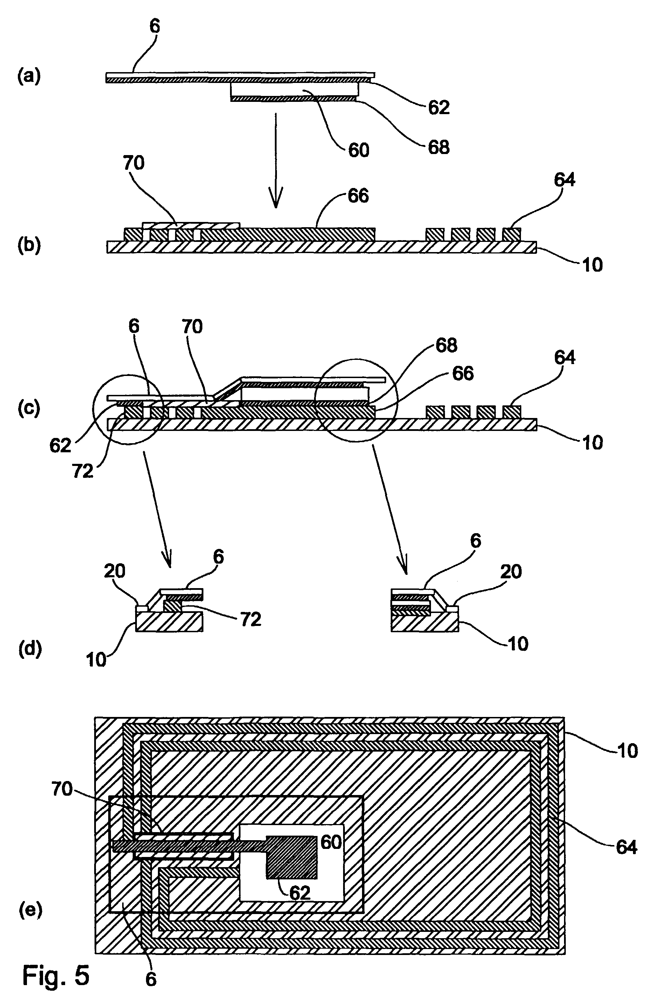

Bei dem in Fig. 5 dargestellten Verfahren ist nun ein Schaltungschip 60 verwendet, der eine erste Anschlußfläche auf einer ersten Hauptoberfläche desselben und eine zweite Anschlußfläche auf einer zweiten Hauptoberfläche desselben aufweist. Das erste Modul, das in Fig. 5a) gezeigt ist, wird nun gebildet, indem eine einzelne Verbindungsmetallisierung 62 auf eine Haltefolie 6 aufgebracht wird. Auf die Verbindungsmetallisierung 62 wird der Schaltungschip 60 aufgebracht, wobei eine elektrisch leitfähige Verbindung zwischen der Anschlußfläche des Schaltungschips 60 und der Verbindungsmetallisierung 62 beispielsweise mittels leitfähigen Klebern oder mittels Löten hergestellt wird.

In Fig. 5b) ist das zweite Modul dargestellt, wobei zur Erzeugung desselben zunächst eine Antennenmetallisierung 64 auf ein Trägersubstrat 10 aufgebracht wird. Wie in Fig. 5b) gezeigt ist, weist die Antennenmetallisierung 64 ein vorzugsweise vergrößertes zweites Anschlußende 66 auf, auf das beim Zusammenfügen des ersten und zweiten Moduls der Schaltungschip 60, der auf der Unterseite desselben eine die Anschlußfläche verstärkende Metallisierung 68 aufweisen kann, aufgebracht wird. Wie bereits bezugnehmend auf Fig. 1 erläutert wurde, wird auch bei dem in Fig. 5 dargestellten Ausführungsbeispiel eine lokale Isolationsschicht 70 auf entsprechenden Bereichen der Antennenmetallisierung 64 gebildet, um nachfolgend einen Kurzschluß zwischen der Verbindungsmetallisierung 62 und der Antennenmetallisierung 64 zu verhindern.

Nun wird das erste Modul mit dem zweiten Modul verbunden, siehe Fig. 5c), wobei gleichzeitig ein Kontakt zwischen der Metallisierung 68, d.h. der zweiten Anschlußfläche auf der Unterseite des Schaltungschips 60 und dem zweiten Anschlußende der Antennenmetallisierung 66 bewirkt wird, und wobei gleichzeitig eine elektrisch leitfähige Verbindung zwischen der Verbindungsmetallisierung 62 und dem ersten Anschlußende 72 der Antennenmetallisierung 64 bewirkt wird. Wie in den Ausschnitten, die in Fig. 5d) gezeigt sind, zu erkennen ist, werden auch bei diesem Ausführungsbeispiel wiederum die Randbereiche 20 der Haltefolie 6 mit entsprechenden benachbarten Bereichen des Trägersubstrats 10 verbunden, d.h. verschweißt oder verklebt. In Fig. 5e) ist eine Draufsicht des sich ergebenden Mikrotransponders dargestellt.

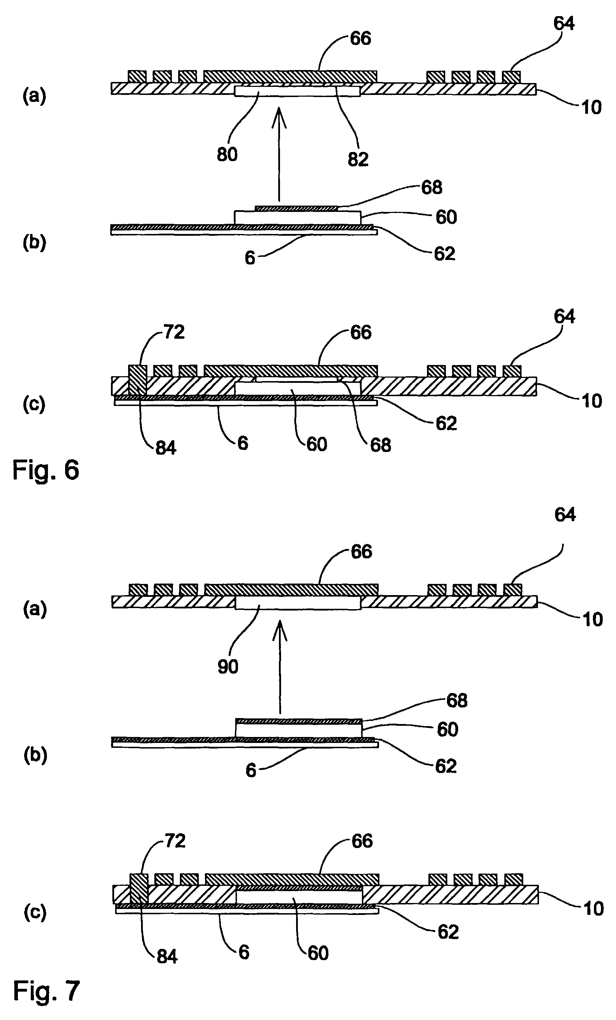

Bei dem sechsten, schematisch in Fig. 6 dargestellten Ausführungsbeispiel des erfindungsgemäßen Verfahrens wird wiederum ein erstes Modul vorbereitet, daß im wesentlichen dem ersten Modul, das in Fig. 5 gezeigt ist, entspricht. Dieses erste Modul ist in Fig. 6b) gezeigt. Das zweite Modul unterscheidet sich dahingehend von dem bezugnehmend auf Fig. 5 beschriebenen, das in der von der Antennenmetallisierung 64 abgewandten Hauptoberfläche des Trägersubstrats 10 eine Ausnehmung 80 gebildet ist, Fig. 6a). Wie in Fig. 6c) zu sehen ist, wird beim Zusammenfügen der beiden Module bei diesem Ausführungsbeispiel der Schaltungschip 60 in diese Ausnehmung 80 eingebracht. Zur elektrischen Kontaktierung der auf der Oberseite des Schaltungschips angeordneten Anschlußfläche desselben, bzw. der metallischen Verstärkung 68 mit dem zweiten Anschlußende 66 der Antennenmetallisierung 64 ist es notwendig, den oberhalb der Ausnehmung 80 angeordneten Steg 82 des Trägersubstrats vorzugsweise mittels eines thermisch unterstützten Verfahrens aufzulösen, um eine elektrisch leitfähige Verbindung zwischen der auf der Oberseite des Schaltungschips 60 angeordneten Anschlußfläche und dem zweiten Anschlußende 66 der Antennenmetallisierung 64 zu bewirken. Ferner wird eine Durchkontaktierung 84 erzeugt, um eine elektrisch leitfähige Verbindung zwischen der Verbindungsmetallisierung 62 und dem ersten Anschlußende 72 der Antennenmetallisierung 64 zu erzeugen. Auch bei diesem Ausführungsbeispiel werden die Ränder der Haltefolie 6 mit dem Trägersubstrat 10 verklebt oder verschweißt, um eine Verkapselung zu erreichen.

Auch bei dem in Fig. 7 schematisch dargestellten Ausführungsbeispiel wird ein Schaltungschip 60 mit doppelseitiger Kontaktierung verwendet. Im Unterschied zu dem bezugnehmend auf Fig. 6 beschriebenen Verfahren ist jedoch nun eine Ausnehmung 90 in dem Trägersubstrat 10 vorgesehen, die das Trägersubstrat 10 vollständig bis zu dem zweiten Anschlußende 66 der Spulenmetallisierung 64 durchdringt. Das weitere Verfahren zur Herstellung des Mikrotransponders gemäß dem in Fig. 7 dargestellten Ausführungsbeispiel entspricht im wesentlichen dem bezugnehmend auf Fig. 6 beschriebenen, wobei jedoch nun auf die Wärmebehandlung zur Beseitigung eines Stegs über der Ausnehmung 90 verzichtet werden kann, da ein solcher Steg nicht vorliegt. Die übrigen Schritte entsprechen den bezugnehmend auf Fig. 6 beschriebenen Schritten.

Es sei darauf hingewiesen, daß das zweite Anschlußende 66 der Antennenmetallisierung 64 den Schaltungschip 60 vollständig oder partiell überdecken kann. Ferner kann die Metallisierung 68 auf dem Schaltungschip 60 denselben vollständig oder partiell bedecken, wobei ferner einem Fachmann klar ist, daß zwischen der Metallisierung 68 und dem Schaltungschip 60 mit Ausnahme der Anschlußfläche des Schaltungschips 60 eine Passivierungsschicht angeordnet ist.

Die vorliegende Erfindung schafft somit eine einfache Technik zur Herstellung eines Mikrotransponders, bei der die Herstellung des Antennenmoduls vollständig von der Herstellung des Schaltungschipmoduls getrennt ist. Das Schaltungschipmodul kann wesentlich dünner ausgeführt werden als das Antennenmodul. Verschiedene Herstellungstechniken können zur Herstellung des Antennenmoduls und zur Herstellung des Schaltungschipmoduls verwendet werden. Durch eine Kapselung des Schaltungschips bzw. eine großflächige Bedeckung desselben mit einer Metallisierung ist ein guter Lichtschutz möglich. Die erfindungsgemäßen Verfahren werden vorzugsweise derart durchgeführt, daß die einzelnen Module jeweils auf einem Endlosmaterial gebildet werden und nachfolgend sequentiell einer Verarbeitungsstation, in der die Module zusammengefügt werden, zugeführt werden. Die jeweiligen metallischen Schichten können aus einem ferromagnetischen Material bestehen, um bei Bedarf eine magnetische Handhabung der einzelnen Module oder auch des fertiggestellten Mikrotransponders zu ermöglichen. Das dünne Schaltungschipmodul kann zur Handhabung durch einen zusätzlichen Träger unterstützt werden, um eine Stabilisierung zu erreichen, wodurch Verwölbungen oder sogar ein Aufrollen aufgrund interner mechanischer Spannungen vermieden werden kann. Das Einkapseln des Schaltungschips und weiterer optionaler Bereiche wird vorzugsweise im Vakuum oder unter Zuführung eines Schutzgases, beispielsweise eines Formiergases, durchgeführt.

## Patentansprüche

1. Verfahren zum Herstellen eines Mikrotransponders, mit folgenden Schritten:
a) Aufbringen einer Antennenmetallisierung (12; 64) mit einem ersten (16; 72) und einem zweiten (18; 66) Anschlußende auf ein Trägersubstrat (10);
b) Aufbringen einer Verbindungsmetallisierung (2, 4; 62) auf eine flexible Trägerfolie (6);
c) Aufbringen eines Schaltungschips (8; 60) mit einer ersten und einer zweiten Anschlußfläche auf die Verbindungsmetallisierung (2, 4; 62), derart, daß zumindest die erste Anschlußfläche des Schaltungschips mit der Verbindungsmetallisierung (2; 62) elektrisch leitfähig verbunden wird;
d) Zusammenfügen des Trägersubstrats (10) und der Trägerfolie (6), derart, daß die Verbindungsmetallisierung (2; 62) mit dem ersten Anschlußende (16; 72) der Antennenmetallisierung (12; 64) elektrisch leitfähig verbunden wird, und daß die zweite Anschlußfläche des Schaltungschips (8; 60) mit dem zweiten Anschlußende (18; 66) der Antennenmetallisierung (12; 64) elektrisch leitfähig verbunden wird; und
e) Verbinden von Randbereichen (20) der flexiblen Trägerfolie (6) mit benachbarten Bereichen des Trägersubstrats (10) zum Einkapseln zumindest des Schaltungschips (8; 60).

2. Verfahren nach Anspruch 1, bei dem die Randbereiche (20) der flexiblen Trägerfolie (6) mit den benachbarten Bereichen des Trägersubstrats (10) verschweißt werden.

3. Verfahren nach Anspruch 1, bei dem die Randbereiche (20) der flexiblen Trägerfolie (6) mit den benachbarten Bereichen des Trägersubstrats (10) verklebt werden.

4. Verfahren nach einem der Ansprüche 1 bis 3, bei dem im Schritt b) eine erste und eine zweite Verbindungsmetallisierung (2, 4) auf die flexible Trägerfolie (6) aufgebracht werden, und bei dem im Schritt c) der Schaltungschip (8), der die erste und die zweite Anschlußfläche auf einer ersten Hauptoberfläche desselben aufweist, derart auf die erste und die zweite Verbindungsmetallisierung (2, 4) aufgebracht wird, daß die erste Anschlußfläche mit der ersten Verbindungsmetallisierung (2) elektrisch leitfähig verbunden wird, und daß die zweite Anschlußfläche mit der zweiten Verbindungsmetallisierung (4) elektrisch leitfähig verbunden wird, wobei die zweite Anschlußfläche im Schritt d) über die zweite Verbindungsmetallisierung (4) mit dem zweiten Anschlußende (18) der Antennenmetallisierung (12) elektrisch leitfähig verbunden wird.

5. Verfahren nach einem der Ansprüche 1 bis 3, bei dem der im Schritt c) aufgebrachte Schaltungschip (60) die erste Anschlußfläche auf einer ersten Hauptoberfläche desselben aufweist und die zweite Anschlußfläche auf einer der ersten Hauptoberflächen gegenüberliegenden zweiten Hauptoberfläche aufweist.

6. Verfahren nach Anspruch 4, bei dem im Schritt d) die Trägerfolie (6) und das Trägersubstrat (10) derart zusammengefügt werden, daß die Antennenmetallisierung (12) und der Schaltungschip (8) auf der gleichen Hauptoberfläche des Trägersubstrats (10) angeordnet sind.

7. Verfahren nach Anspruch 4, bei dem der Schaltungschip (8) im Schritt d) in eine Ausnehmung (30) in der Hauptoberfläche des Trägersubstrats (10), auf die die Antennenmetallisierung (12) aufgebracht wurde, eingebracht wird.

8. Verfahren nach Anspruch 6 oder 7, bei dem eine Isolatorstruktur (14) vorgesehen wird, um die zweite Verbindungsmetallisierung (4) außer an dem zweiten Anschlußende (18) der Antennenmetallisierung (12) von der Antennenmetallisierung (12) zu isolieren.

9. Verfahren nach Anspruch 4, bei dem im Schritt d) die Trägerfolie (6) und das Trägersubstrat (10) derart zusammengefügt werden, daß die Antennenmetallisierung (12) und der Schaltungschip (8) auf gegenüberliegenden Hauptoberflächen des Trägersubstrats (10) angeordnet sind, wobei die erste und die zweite Verbindungsmetallisierung (2, 4) mittels Durchkontaktierungen (40, 42) mit dem ersten und dem zweiten Anschlußende (16, 18) der Antennenmetallisierung (12) verbunden werden.

10. Verfahren nach Anspruch 4, bei dem im Schritt d) der Schaltungschip (8) in eine Ausnehmung (50) in der Hauptoberfläche des Trägersubstrats (10), die der Hauptoberfläche, auf die die Antennenmetallisierung (12) aufgebracht wurde, gegenüberliegt, eingebracht wird, wobei die erste und die zweite Verbindungsmetallisierung (2, 4) mittels Durchkontaktierung (40, 42) mit dem ersten und dem zweiten Anschlußende (16, 18) der Antennenmetallisierung (12) verbunden werden.

11. Verfahren nach Anspruch 5, bei dem im Schritt d) die Trägerfolie (6) und das Trägersubstrat (10) derart zusammengefügt werden, daß die Antennenmetallisierung (64) und der Schaltungschip (60) auf der gleichen Hauptoberfläche des Trägersubstrats (10) angeordnet sind.

12. Verfahren nach Anspruch 5, bei dem im Schritt d) der Schaltungschip (60) in eine Ausnehmung (80; 90) in der Hauptoberfläche des Trägersubstrats (10), die der Hauptoberfläche, auf die die Antennenmetallisierung (64) aufgebracht wurde, gegenüberliegt, aufgebracht wird, wobei die Verbindungsmetallisierung (62) über eine Durchkontaktierung (84) mit dem ersten Anschlußende (72) der Antennenmetallisierung (64) verbunden wird.

13. Verfahren nach einem der Ansprüche 1 bis 12, bei dem der Schritt e) im Vakuum oder unter Verwendung eines Schutzgases durchgeführt wird.
